Europäisches Patentamt

European Patent Office

Office européen des brevets

(11) Publication number: **0 226 575**
**B1**

# EUROPEAN PATENT SPECIFICATION

(45) Date of publication of patent specification: **18.10.89**

(21) Application number: **85902714.6**

(22) Date of filing: **23.05.85**

(86) International application number:
**PCT/SE85/00217**

(87) International publication number:
**WO 85/05352 05.12.85 Gazette 85/26**

(51) Int. Cl.⁴: **C 04 B 37/02,** C 22 C 1/05,
C 22 C 33/02, B 22 F 7/00

(54) **INHOMOGENOUS SINTERED BODY.**

(30) Priority: **24.05.84 SE 8402811**

(43) Date of publication of application:
**01.07.87 Bulletin 87/27**

(45) Publication of the grant of the patent:
**18.10.89 Bulletin 89/42**

(84) Designated Contracting States:
**AT BE CH DE FR GB IT LI LU NL SE**

(56) References cited:
**WO-A-83/00844**
**WO-A-84/02483**
**DE-A-3 026 696**
**GB-A-1 339 742**
**SE-B- 315 742**
**SE-B- 338 439**

(73) Proprietor: **Höganäs AB**
**Box 501**
**S-263 01 Höganäs (SE)**

(72) Inventor: **SVENSSON, Lars-Erik**
**Lerbergsvägen 59**
**S-263 00 Höganäs (SE)**
Inventor: **THORNBLAD, Ove**
**Väktaregatan 3**
**S-263 00 Höganäs (SE)**

(74) Representative: **Burman, Tore et al**
**Bergling & Sundbergh AB P.O. Box 7645**
**S-103 94 Stockholm (SE)**

Courier Press, Leamington Spa, England.

## Description

The object of the invention is to prepare components using a powder-metallurgical manufacturing technique starting from metal powder and refractory ceramic powder with high requirements as to the binding between the components involved.

The powder-metallurgical manufacturing technique is characterized by production in long series of parts having high dimensional accuracy. The manufacturing starts by mixing a metallic powder, for example iron powder, optionally having added pulverulent alloying agents thereto with a lubricant to facilitate the subsequent compacting operation. In this operation the powder mixture is compacted to a moulding blank, the shape of which closely or completely corresponds to the shape of the final part. The blank is heated and is then maintained at a temperature at which it by sintering obtains its final properties, such as strength, toughness etc.

Serial manufacture of dry-compacted refractory ceramics shows several similarities with the powder-metallurgical manufacturing techniques. In iron powder based compact manufacturing sintering normally takes place within the temperature range 1000—1300°C. For more low-melting metals and alloys, such as for example aluminum and bronze, the sintering temperature usually lies between 500—900°C. When manufacturing powder-compacted refractory ceramics the sintering, however, takes place within the temperature range 1400—1700°C.

Refractory materials are in combination with metals, of great interest for example as heat shields. The difficulties of joining a refractory material with metal in a durable manner lies in the fact that the materials involved normally have different coefficients of expansion. Joining may then be accomplished using for example countersunk bolts which, however, when used under mechanical load inter alia can result in unsuitably high weight to obtain the necessary strength. It is also possible to perform joining using a glue, but then it is a requirement that heating cannot take place beyond the heat resistance of the glue. If inorganic glue, for example waterglass, is used in such cases when the ceramics is expected to be subjected to a relatively high temperature there is an obvious risk that different coefficients of expansion will cause failure of the ceramics. Moreover, the multitude of operational steps in this manufacturing results in high costs. Other known methods are for example soldering on ceramics. This is a laborious method requiring high accuracy and at least seven different operational steps. Moreover, it is required that the grain size of the soldering powder shall be less than 1 micron.

According to the invention it has, however, been found that it is possible by powder-pressing and subsequent sintering to obtain in a simple manner surprisingly good binding between ceramics and metal. The simplicity consists in the fact that it has been found possible to press together a ceramic powder and a metal powder (for example iron powder) in one step. The pressing can take place at such low pressures as about 50 MPa, and high strength can be obtained also in the ceramic part at such a low temperature as 800°C.

There are two partly overlapping problems which the inventors have been obliged to solve. The dilatation curves for metals and ceramics usually differ strongly from each other. It has been found that the damaging effect of this can be eliminated by using as a binding phase between a ceramic layer and a metal layer one or several layers of a mixture of the components involved. The fraction of metal or ceramics to be present in the mixture is wholly dependant on the area of use and whether the mixture shall be bound to ceramics and/or metal. It is obvious that sintered bodies also can be manufactured in accordance with the invention in only one layer and where the amount of the components involved can be controlled by the area of use. At the temperature which can be endured by the metal part of the sintered body the refractory ceramics sinters only poorly. It has, however, been found possible to modify the ceramic material involved in such a manner that the necessary strength will be obtained during sintering. This can be achieved in two ways, namely either by adding alumina or aluminum hydrate and phosphoric acid or dry phosphoric acid and a suitable quantity of water, or by adding monoaluminium phosphate solution or monoaluminium phosphate and water, such added material forming an effective binder between metal and ceramics.

In the following the invention will be exemplified and experiments will be presented which have been made using the technique according to the invention and the unexpected results hereby obtained.

Example 1

A mixture, designated A, was prepared in the following manner, 600 g of alumina powder having a maximum particle size of 400 microns and 350 g alumina powder having a maximum particle size of 45 microns were thoroughly mixed together with 50 g of 80% phosphoric acid.

500 g of the mixture prepared according to the above was admixed with 500 g of iron sponge powder having a maximum particle size of 147 microns. The mixture thus prepared is in the following designated B.

A mixture C consisting of the following components was prepared; 990 g of iron sponge powder having a maximum particle size of 147 microns, 10 g of zinc stearate powder having a maximum particle size of 147 microns.

Of each of mixtures A—C there were prepared test bodies having the dimensions φ 25 mm, h 25 mm, by pressing at a pressure of 200 MPa, heat treatment in evaporation oven at 300°C for a period of time of 15 min. in a neutral atmosphere, and the bodies were then sintered at a temperature of 1050°C for 30 min in a non-oxidizing atmosphere.

The dilatation process was determined for the test bodies thus prepared within the temperature range 20—600°C. The result which is presented in diagram 1 surprisingly shows that the dilatation process for the test body manufactured from mixture B corresponded considerably closer to the dilatation process registered for the test body manufactured from mixture A than to the process for the test body from mixture C in spite of the fact that mixture B is constituted by the same parts by weight of mixture A and C.

## Example 2

Four powder mixtures, D, E, F and G having a composition according to the table below were prepared:

### Mixture D:

90% alumina powder having a maximum particle size of 150 microns
5.0% monoaluminum phosphate solution
5.0 carbon-forming organic powder.

### Mixture E:

50.0% of mixture D.
50.0% of an iron sponge powder having a maximum particle size of 210 microns.

### Mixture F:

95.0% alumina powder having a maximum particle size of 150 microns.
5.0% carbon-forming organic powder.

### Mixture G:

50.0% of mixture F.
50.0% of an iron sponge powder having a maximum particle size of 210 microns.

Test bodies having the dimensions φ 25 mm and h 25 mm were pressed in two layers at a pressure of 90 MPa. The composition of the test bodies is clear from the table below.

### Testbody I:
Layer 1: consisting of powder from mixture D.
Layer 2: consisting of powder from mixture E.

### Testbody II:
Layer 1: consisting of powder from mixture F.
Layer 2: consisting of powder from mixture G.

The test bodies were sintered at 900°C for 20 min in a neutral protective gas atmosphere.

The test bodies thus prepared were investigated with regard to compressive strength. For test body II there was measured a total load at break of 190 N, whereas test body I was still coherent at a load of 5500 N, the investigation being discontinued. Moreover, the test bodies were examined under microscope making it clear that the significantly better strength measured for test body I is a result of the fact that the addition of monoaluminum phosphate provides for sintering bonds between the ceramic particles but also, which is a wholly surprising effect, provides for sintering bonds between the ceramic particles and the metal particles. The results of the experiments described herein show that the binding between ceramics and metal can be considerably improved by using the process according to the invention.

## Example 3

Multi-layer test bodies having the composition according to the table below were prepared.

### Test body III:
Layer 1: consisting of 92.0% alumina powder and 8.0% dry phosphoric acid+a suitable quantity of water for forming monoaluminum phosphate.

Layer 2: consisting of 46.0% of alumina powder and 4.0% of dry phosphoric acid+water according to the above and 50.0% iron powder having a maximum particle size of 400 microns.

Layer 3: consisting of 96.0% of iron powder having a maximum particle size of 400 microns and 3.5% carbon-forming organic powder having a particle size of less than 400 microns and 0.5% of zinc stearate powder.

### Test body IV:
Layer 1: consisting of 95.0% alumina powder and 5.0% monoaluminum phosphate solution.

Layer 2: consisting of 71.0% alumina powder and 5.0% monoaluminum phosphate solution and 24.0% of iron powder.

Layer 3: consisting of 70.0% of iron powder and 25.0% of alumina powder and 5.0% of monoaluminum phosphate solution.

Layer 4: consisting of 99.3% of iron powder and 0.7% of zinc stearate powder.

The test bodies were pressed at 500 MPa, heat treated in evaporation oven and sintered at 1120°C for 30 min in protective gas atmosphere. The dilatation curves of the test bodies were measured. The result which is presented in diagram 2 shows that the dilatation process for multi-layered bodies prepared according to the invention corresponds very closely to the dilatation process for pressed and sintered ceramics.

Moreover, the test bodies were examined under microscope and it could be observed that good binding between ceramics and metal was obtained and creation of cracks between ceramic particles and metal particles could not be observed.

As a preliminary test for endurance to heat chock the test bodies were heated with a welding torch on the metal layer to glowing red and were then quenched in water. The test was repeated until all test bodies had disintegrated. None of the test bodies showed increased tendency for formation of cracks at the layer boundaries.

In the examples presented herein for the purpose of exemplifying the invention the inventors have used alumina and iron powder. However, experiments have shown that the ceramics may equally well be aluminum silicates, magnesium-aluminum silicates, zirconias, zirconium silicates, orthosilicates, silicon carbides and slags. Nor is the invention limited to iron powder and alloys thereof but also other metals, such as aluminum, copper, nickel, chromium, molybdenum, manganese and alloys thereof can be used.

It has also been found in continued experiments that it is possible for certain applications to use as a binder also other acid phosphate salts of 2- or 3-valent metals.

The wording used in Claim 1: "or in several layers having different mixing ratios between the ceramics and metal used" is intended to cover also a composite body wherein the said ratio varies continuously over a cross-section of the body, for example from one side of it to the other. In other words, this embodiment is constituted by infinitesimally thin layers. In an extreme case the body may thus on one side thereof consist of metal whereas the opposite side consists of ceramics.

With regard to the binder used the presence of water is important. Thus at least one of the components of the binder may be added in the form of a solution. In the alternative dry material may be supplemented with external water. The amount of binder (based on solids thereof) is not particularly critical but is suitably up to about 10% by weight, based on the weight of the composite body.

The lower limit is determined by the quantity necessary for effective binding. An amount of about 1% is usually necessary, and at least about 2 or 3% by weight is usually employed.

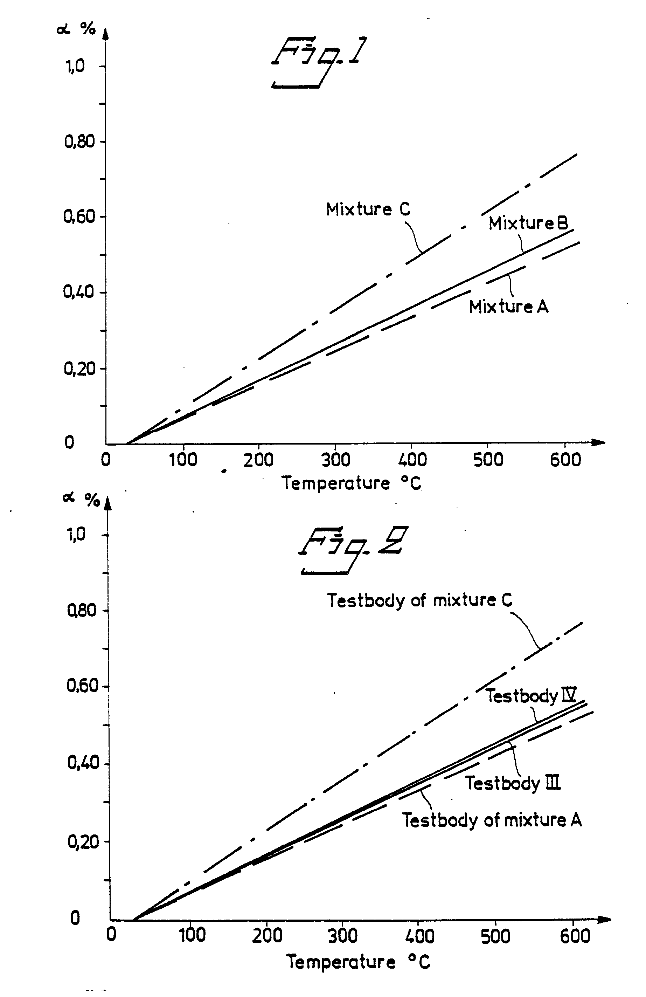

## Claims

1. A process for preparing a composite sintered body by adjoining a metal powder layer with a ceramic refractory powder layer, characterized in that the sintered body is prepared in one step using a binding phase between a ceramic layer and a metal layer, said binding phase consisting of one or several layers of a mixture of ceramics and metal, whereby each of said layers has a different mixing ratio and alumina (or aluminum hydrate) and phosphoric acid (or dry phosphoric acid and water) or monoaluminum phosphate and water are admixed into the ceramic layer and the binding phase.

2. A process according to Claim 1, characterized thereby that sintering takes place at a temperature of 800—1350°C, preferably 1000—1250°C.

3. A process according to Claim 1 or 2, characterized thereby that the powder pressing takes place at a pressure of 50—1000 MPa, preferably 100—500 MPa.

4. A process according to any of Claims 1—3, characterized thereby that sintering takes place for a period of at least 10 min in a non-oxidizing atmosphere.

5. A process according to any of Claims 1—4, characterized thereby that the metal powder contains one or several of the elements iron, aluminum, copper, nickel, molybdenum, chromium and manganese.

6. A process according to any of Claims 1—5, characterized thereby that the metal powder additionally contains one or several of the elements carbon, phosphorus and silicon.

7. A process according to any of Claims 1—6, characterized thereby that the ceramics contains one or several of the following ceramic materials: aluminum silicates, magnesium-aluminum silicates, zirconias, zirconium silicates, orto silicates, silicon carbides and slags.

## Patentansprüche

1. Verfahren zur Herstellung eines zusammengesetzten gesinterten Körpers durch Verbinden einer Metallpulverschicht mit einer hitzebeständigen Keramikpulverschicht, dadurch gekennzeichnet, daß der gesinterte Körper in einer Stufe unter Verwendung einer Bindungsphase zwischen einer Keramikschicht und einer Metallschicht hergestellt wird, wobei die Bindungsphase aus einer oder mehreren Schichten eines Gemisches von Keramik und Metall besteht, wobei jede dieser Schichten ein unterschiedliches Mischungsverhältnis hat und Aluminiumoxid (oder Aluminumcumhydrat) und Phosphorsäure (oder trockne Phosphorsäure und Wasser) oder Monoaluminiumphosphat und Wasser mit der Keramikschicht und der Bindungsphase vermischt werden.

2. Verfahren nach Anspruch 1, dadurch gekennzeichnet, daß das Sintern bei einer Temperatur von 800 bis 1350°C, vorzugsweise bei 1000 bis 1250°C stattfindet.

3. Verfahren nach Anspruch 1 oder 2, dadurch gekenneichnet, daß das Pulverpressen bei einem Druck von 50 bis 1000 MPa, vorzugsweise bei 100 bis 500 MPa stattfindet.

4. Verfahren nach einem der Ansprüche 1 bis 3, dadurch gekennzeichnet, daß das Sintern während einer Zeitdauer von wenigstens 10 min in einer nichtoxidierenden Atmosphäre stattfindet.

5. Verfahren nach einem der Ansprüche 1 bis 4, dadurch gekennzeichnet, daß das Metallpulver eines oder mehrere der Elemente Eisen, Aluminium, Kupfer, Nickel, Molybdän, Chrom und Mangan enthält.

6. Verfahren nach einem der Ansprüche 1 bis 5, dadurch gekennzeichnet, daß das Metallpulver zusätzlich eines oder mehrere der Elemente Kohlenstoff, Phosphor und Silicium enthält.

7. Verfahren nach einem der Ansprüche 1 bis 6, dadurch gekennzeichnet, daß die Keramik eines oder mehrere der folgenden Keramikmaterialien enthält: Aluminiumsilikate, Magnesium-Aluminiumsilikate, Zirkoniumoxid, Zirkoniumsilikate, Orthosilikate, Siliciumcarbide und Schlacken.

## Revendications

1. Procédé pour préparer un corps fritté composite par la combinaison de liaison d'une couche de poudre de métal avec une couche de poudre de matière céramique réfractaire, procédé caractérisé en ce qu'on prépare en une étape le corps fritté en utilisant une phase de liaison entre une couche de matière céramique et une couche de métal, ladite phase de liaison consistant en une ou plusieurs couches d'un mélange de matière céramique et de métal, chacune desdites couches ayant un taux différent de mélange, et de l'alumine (ou de l'hydrate d'aluminium) et de l'acide phosphorique (ou de l'acide phosphorique sec et de l'eau) ou du phosphate de monoaluminium et de l'eau sont incorporés à la couche de matière céramique et à la phase de liant.

2. Procédé selon la revendication 1, caractérisé en ce que le frittage a lieu à une température de 800 à 1350°C, de préférence 1000 à 1250°C.

3. Procédé selon la revendication 1 ou 2, caractérisé en ce que le pressage des poudres a lieu à une pressino de 50 à 1000 MPa, de préférence 100 à 500 MPa.

4. Procédé selon l'une quelconque des revendications 1 à 3, caractérisé en ce que le frittage a lieu pendant une période d'au moins 10 min en atmosphère non oxydante.

5. Procédé selon l'une quelconque des revendications 1 à 4, caractérisé en ce que la poudre de métal contient un ou plusieurs des éléments: fer, aluminium, cuivre, nickel, molybdène, chrome et manganèse.

6. Procédé selon l'une quelconque des revendications 1 à 5, caractérisé en ce que la poudre de métal contient en outre un ou plusieurs des éléments carbone, phosphore et silicium.

7. Procédé selon l'une quelconque des revendications 1 à 6, caractérisé en ce que la matière céramique contient une ou plusieurs des matières céramiques suivantes: des silicates d'aluminium, des silicates de magnésium-aluminium, des oxydes de zirconium, des silicates de zirconium, des orthosilicates, des carbures de silicium et des laitiers.

Fig.1

Mixture C

Mixture B

Mixture A

Temperature °C

Fig.2

Testbody of mixture C

Testbody IV

Testbody III

Testbody of mixture A

Temperature °C

1